Europäisches Patentamt

European Patent Office

Office européen des brevets

(11) Veröffentlichungsnummer: **0 024 302**
**A2**

(12) **EUROPÄISCHE PATENTANMELDUNG**

(21) Anmeldenummer: **80104135.1**

(22) Anmeldetag: **16.07.80**

(51) Int. Cl.³: **H 01 G 9/04,** H 01 G 9/08, H 01 G 9/24

(30) Priorität: **09.08.79 DE 2932294**

(43) Veröffentlichungstag der Anmeldung: **04.03.81**
**Patentblatt 81/9**

(84) Benannte Vertragsstaaten: **FR GB IT NL**

(71) Anmelder: **International Standard Electric Corporation,
320 Park Avenue, New York New York 10022 (US)**

(72) Erfinder: **Treml, Karl, Dr., Adam-Klein-Strasse 110,
D-8500 Nürnberg (DE)**

(74) Vertreter: **Thul, Leo, Dipl.-Phys., Kurze
Strasse 8 Postfach 300 929, D-7000 Stuttgart 30 (DE)**

(54) **Trockenelektrolyt-Kondensator.**

(57) Tantal-Trockenelektrolytkondensator und Verfahren zu seiner Herstellung, bei dem der Anodenkörper in nicht-leitendes Kunstharz eingebettet ist. Der aus dem Kunstharz herausragende Tantaldraht wurde von der Oxidschicht befreit und ist in eine Schicht aus leitendem Kunstharz als Anodenanschluß eingebettet. Der Kathodenanschluß kann ebenfalls aus einer Schicht aus leitendem Kunstharz bestehen.

Patentanwalt
Dipl.-Phys. Leo Thul
Kurze Str. 8, Postfach 300 929
D-7000 Stuttgart 30
Deutschland

0024302

## Trockenelektrolyt-Kondensator

Die Erfindung bezieht sich auf einen Trockenelektrolyt-Kondensator mit einer Anode aus Ventilmetall, einer darauf angeordneten dielektrischen Oxidschicht, einer Kathodenschicht aus einem halbleitenden Oxid auf der dielektrischen Schicht, einer oder mehreren leitenden Schichten auf der halbleitenden Schicht, einem mit der Anode verbundenen Zuleitungsdraht aus Ventilmetall und lötfähigen Anschlüssen an der obersten leitenden Schicht und an dem Zuleitungsdraht aus Ventilmetall. Weiter bezieht sich die Erfindung auf ein Verfahren zur Herstellung von solchen Trockenelektrolyt-Kondensatoren.

Trockenelektrolyt-Kondensatoren der eingangs genannten Art sind weitgehend bekannt. Bekanntlich werden hierbei unter einem Ventilmetall Metalle verstanden, auf denen sich durch einen Formiervorgang eine dielektrische Oxidschicht erzeugen läßt. Die heute gebräuchlichsten Ventilmetalle sind Tantal und Aluminium. Bei den Trockenelektrolyt-Kondensatoren der eingangs genannten Art ist auf der dielektrischen Oxidschicht eine Kathodenschicht aus einem halbleitenden Oxid angeordnet. Als halbleitendes Oxid wird meist Mangandioxid verwendet, obgleich sich auch andere halbleitende Oxide, wie z.B. Bleidioxid, hierfür eignen. Auf der halbleitenden Oxidschicht sind eine oder mehrere leitende Schichten angeordnet, wie z.B. eine Graphitschicht, eine Leitsilberschicht und eine Lotmetallschicht. Die Anode ist mit einem Anodenzuleitungsdraht aus Ventilmetall verbunden, also

Fr/rk  -  08.08.1979

. / .

beispielsweise bei Anoden aus Tantal mit einem Tantaldraht. Der Tantaldraht kann beispielsweise in eine Anode in Form eines Sinterkörpers aus Tantal eingepreßt sein, er kann aber auch an eine Folie aus Tantal angeschweißt sein. Da sich die Anodenzuleitungsdrähte aus Ventilmetall einerseits nicht löten lassen, andererseits aber üblicherweise Kondensatoren in elektrische Schaltungen eingelötet werden, wird an den Anodenzuleitungsdraht aus Ventilmetall ein Draht aus einem gut lötfähigen Metall angeschweißt.

Es hat sich nun gezeigt, daß die fertigen Trockenelektrolyt-Kondensatoren vielfach wesentlich schlechtere elektrische Eigenschaften haben als die zuvor gemessenen beschichteten Anoden. Der vorliegenden Erfindung liegt die Erkenntnis zugrunde, daß diese Verschlechterungen der elektrischen Eigenschaften mindestens teilweise auf das Anschweißen eines lötfähigen Drahtes an den Anodenzuleitungsdraht zurückzuführen sind. Durch die große Wärmeeinwirkung beim Schweißen werden die auf der Anodenzuleitung und den anschließenden Teilen der Anode angeordneten Schichten in nachteiliger Weise verändert, so daß die elektrischen Eigenschaften des Kondensators gegenüber denen vor dem Anschweißen eines Anschlußdrahtes an die Anodenzuleitung wesentlich verschlechtert werden.

Der Erfindung liegt die Aufgabe zugrunde, Trockenelektrolyt-Kondensatoren der eingangs genannten Art zu schaffen, bei denen an dem Anodenzuleitungsdraht ein lötfähiger Anschluß angebracht ist, ohne daß hierbei eine wesentliche Wärmeeinwirkung erforderlich ist.

. / .

- 3 -

0024302

Diese Aufgabe wird durch die im Kennzeichen des Anspruches 1 angegebenen Maßnahmen gelöst.

In den Unteransprüchen sind vorteilhafte Weiterbildungen der Erfindung sowie ein Verfahren zur Herstellung von Trockenelektrolyt-Kondensatoren gemäß der Erfindung angegeben.

Um einen guten Kontakt mit der als Anodenanschluß dienenden leitenden Schicht zu erhalten, muß das Ende des Anodenzuleitungsdrahtes zunächst von der Oxidschicht befreit werden. Dies kann in einfacher Weise durch Sandstrahlen oder Schleifen geschehen. Es können aber auch andere Verfahren wie z.B. Ätzverfahren verwendet werden. Beim Einbetten des so von der Oxidschicht befreiten Endes des Anodenzuleitungsdrahtes in eine leitende Schicht ist keine wesentliche Erwärmung erforderlich. Es tritt daher auch keine Verschlechterung der elektrischen Eigenschaften des Kondensators bei der Herstellung des Anodenanschlusses auf.

Als leitende Schicht kann eine aufgedampfte oder aufgespritzte Metallschicht verwendet werden. Beim Aufspritzen von Metallteilchen kühlen sich diese vor dem Auftreffen auf den Anodenzuleitungsdraht soweit ab, daß hierbei keine wesentliche Erwärmung des Anodenzuleitungsdrahtes und der anschließenden Schichten eintritt.

Besonders einfach und vorteilhaft ist jedoch, als Anodenanschlußschicht einen mit leitenden Teilchen versetzten Kunststoff zu verwenden, insbesondere einen

./.

sogenannten kalthärtenden Kunststoff. Der Kunststoff
bzw. der zugesetzte Härter dürfen jedoch nicht oxidierend auf den Anodenanschlußdraht wirken.

Deshalb gilt diese Bedingung zumindest für die Teile
der leitenden Schicht in unmittelbarer Umgebung des
Anodenzuleitungsdrahtes. Es ist daher ohne weiteres
möglich, den von der Oxidschicht befreiten Draht in
einen Tropfen eines solchen nicht oxidierenden leitenden Kunststoffes einzubetten, wonach eine weitere
leitende Kunststoffschicht aufgebracht werden kann,
die durchaus oxidierende Bestandteile enthalten kann.
Auch eine Abdeckung des Tantaldrahtes mit einer anderen, keine oxidierbaren Bestandteile enthaltenden leitenden Schicht, ist in einem solchen Fall möglich.

Aus der DE-AS 2 655 659 ist zwar ein Trockenelektrolyt-
Kondensator bekannt, bei dem Metallkappen mittels eines
mit Silberteilchen gefüllten Epoxidharzes auf gegenüberliegenden Stirnseiten des Kondensators aufgeklebt werden,
wobei die Metallkappen die elektrischen Anschlüsse des
Kondensators darstellen. Eine Erwärmung beim Anbringen
des Anodenanschlusses wird jedoch auch hier nicht vermieden, da an den Anodenzuleitungsdraht aus Tantal zunächst ein Nickelstreifen angeschweißt wird, der dann
in den leitenden Kleber eingebettet wird.

Aus dem DE-GM 7 214 107 ist es weiter bekannt, beide
Stirnseiten eines Trockenelektrolyt-Kondensators mit
Kontaktflächen zu versehen, wobei die eine Kontaktfläche die Verbindung zu dem Anodenzuleitungsdraht darstellt. Hier ist jedoch der Anodenzuleitungsdraht

./.

nicht in das Material der Kontaktfläche eingebettet,
so daß nur die Stirnseite des Drahtes als Stromübergang zur Verfügung steht. Hierdurch wird aber ein
sehr großer Übergangswiderstand erhalten. Außerdem
ist dort nicht angegeben, daß der Anodenzuleitungsdraht von seiner Oxidschicht befreit werden muß, bevor er mit der leitenden Schicht in Kontakt gebracht
wird.

Aus der DE-AN S 32 606 VIIIc/21g, die am 20.09.1956
bekanntgemacht wurde, ist eine Kondensatorumhüllung
aus Isolierstoff bekannt, bei dem die Stirnseiten
des Isolierstoffgehäuses als Anschlüsse verwendet
werden und durch Zusatz von Metallteilchen leitend
gemacht sind. Hier handelt es sich aber um einen mit
Stirnkontaktschichten versehenen Kondensator, bei dem
nicht das Problem auftritt, eine Schweißung an einem
Anodenzuleitungsdraht aus Ventilmetall zu vermeiden.

Kondensatoren gemäß der vorliegenden Erfindung können
in sehr einfacher Weise billig und wirtschaftlich hergestellt werden, indem gleichzeitig mehrere Kondensatoren nebeneinander angeordnet mit einer Kathodenanschlußschicht, einer Isolierstoffumhüllung und einer
Anodenanschlußschicht versehen werden, wonach der erhältene Kunststoffblock durch Zerteilen senkrecht zu
den Anschlußschichten in einzelne Kondensatorkörper
aufgeteilt wird. Das Eingießen und Aufteilen von so
vergossenen Kondensatorkörpern ist an sich bekannt,
beispielsweise aus der DE-AS 1 112 769, der DE-AS
2 230 629, der DE-OS 2 031 285 und der DE-OS 2 415 539.

K.Treml 1

Die Erfindung, ihre vorteilhaften Weiterbildungen und
ein Verfahren zur Herstellung von Kondensatoren gemäß der Erfindung sollen anhand der Figuren erläutert
werden.

In den Figuren 1 bis 4 sind im Schnitt verschiedene
Ausführungsformen von Kondensatoren
gemäß der Erfindung dargestellt.

Die Figuren 5 bis 8 stellen einzelne Verfahrensschritte
bei der Herstellung von Kondensatoren
gemäß der Erfindung dar.

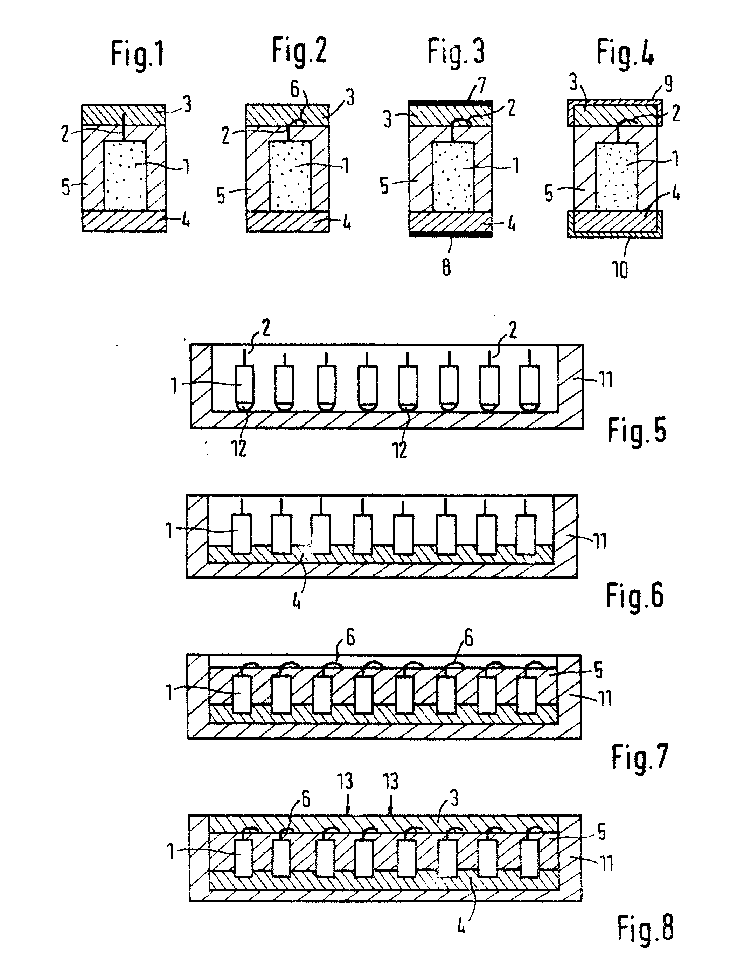

Bei der Ausführungsform nach Figur 1 ist die mit der
üblichen Schichtenfolge versehene Anode 1, welche beispielsweise durch einen Sinterkörper aus Tantal gebildet wird, mit einem eingepreßten Anodenzuleitungdraht 2
aus Tantal versehen. Die am äußeren Umfang des Anodenkörpers 1 angeordnete leitende Schicht ist auf der dem
Anodenzuleitungsdraht 2 gegenüberliegenden Stirnseite
durch eine leitende Schicht 4 kontaktiert, die entweder
aus einem mit Metallteilchen versetzten Kunststoff bestehen kann oder aus einer aufgedampften, aufgespritzten
oder in anderer Weise aufgebrachten Metallschicht 4 besteht. Der Anodenkörper 1 selbst und der anschließende
Teil des Anodenzuleitungsdrahtes 2 sind in einen nichtleitenden Kunststoff 5 eingebettet. Der aus dem Kunststoffkörper 5 herausragende Endteil des Anodenzuleitungsdrahtes 2 wird anschließend, vorzugsweise durch
Sandstrahlen oder Schleifen, von seiner Oxidschicht befreit und dann in die leitende Schicht 3 eingebettet,
welche die Anodenzuleitung des Kondensators bildet.

Die leitende Schicht 3 kann ebenfalls aus einer aufgespritzten oder aufgedampften Metallschicht bestehen.
Vorzugsweise wird jedoch ein mit leitenden Teilchen
versehener kalthärtender Kunststoff hierzu verwendet,
der jedoch keine oxidierenden Bestandteile enthalten
darf, da sonst sofort wieder eine Oxidschicht auf dem
Tantaldraht gebildet wird, die eine Kontaktierung der
leitenden Schicht verhindert. Hierbei tritt keine oder
keine wesentliche Erwärmung des Zuleitungsdrahtes und
der anschließenden Teile der Anode ein, so daß die
elektrischen Eigenschaften des Kondensators keine Verschlechterung erfahren.

Eine weitere vorteilhafte Ausführungsform des Kondensators gemäß der Erfindung ist im Schnitt in Figur 2
dargestellt. Die einzelnen Teile entsprechen denen von
Figur 1. Zum Unterschied zu der Ausführungsform nach
Figur 1 ist der Endteil 6 des Anodenzuleitungsdrahtes
etwa waagerecht umgebogen, wodurch sich die Oxidschicht
leicht durch Abschleifen entfernen läßt und die Anodenzuleitungsschicht 3 dünner gehalten werden kann.

Die Ausführungsform nach Figur 3 unterscheidet sich von
den Ausführungsformen nach Figur 1 und 2 dadurch, daß
an der Außenseite der leitenden Schichten 2 und 4 Metallfolien 7 bzw. 8 angebracht sind. Durch diese Metallfolien ergibt sich eine besonders glatte lötfähige Außenfläche der leitenden Anschlußschichten 3 und 4. Wenn diese aus einem leitenden Kunststoff bestehen, können die
Metallfolien 7 und 8 in einfacher Weise daran befestigt
werden.

Bei der Ausführungsform nach Figur 4 sind die Anschlußschichten 3 und 4 noch mit einer kappenförmigen Schicht
9 bzw. 10 umgeben. Die Randteile der Kappen 9 und 10
können sich noch auf den Isolierstoffkörper 5 erstrekken. Diese Schichten können beispielsweise ebenfalls
aus einem leitend gemachten Kunststoff bestehen und
in einfacher Weise durch Eintauchen der Stirnseiten
des Kondensators in den flüssigen leitenden Kunststoff
hergestellt werden. Diese Ausführungsform hat den Vorteil, daß der Kondensator mit zwei nebeneinander auf
einer Unterlage angeordneten Leitern verlötet werden
kann, ohne daß der Kondensator selbst direkt auf der
Unterlage aufliegt.

Eine weitere vorteilhafte Weiterbildung der Erfindung
besteht darin, daß eine der leitenden Anschlußschichten ein magnetisierbares Material enthält, das vorzugsweise aus Nickel besteht. So kann beispielsweise der
metallische Zusatz zu einer der Schichten 3 oder 4
mindestens teilweise aus Nickelpulver bestehen, oder
eine der Folien 7 oder 8 besteht aus einer Nickelfolie
oder einer nickelhaltigen Folie. Dadurch ist es in einfacher Weise möglich, den nach außen hin symmetrisch
aufgebauten Kondensator nach Anoden- und Kathodenanschluß zu unterscheiden. Mittels eines Magneten lassen
sich die Kondensatoren dann leicht in die gleiche Lage
bringen, so daß bei einer automatischen Bestückung die
Kondensatoren maschinell ausgerichtet werden können.

Die Erfindung bezieht sich weiter auf ein einfaches Verfahren zur Herstellung von solchen Kondensatoren, das
anhand der Figuren 5 bis 8 erläutert werden soll.

- 9 -

Bei dem Verfahren gemäß der Erfindung werden mehrere
Anoden 1 nebeneinander in einer Form 11 angeordnet.
Natürlich kann die Anordnung nicht nur in einer Reihe,
sondern auch in mehreren Reihen hintereinander erfolgen. Die Anoden werden dabei so in der Form 11 angeordnet, daß die Anschlußdrähte 2 aus Ventilmetall nach
oben zeigen.

Um eine gute Verbindung mit der zunächst einzubringenden Anodenanschlußschicht 4 zu erzielen, ist es vorteilhaft, die Anoden, wie in Figur 5 dargestellt, an der
Unterseite mit einem Tropfen 12 aus leitendem Kunststoff zu versehen, wobei zweckmäßig derselbe leitende
Kunststoff verwendet wird, wie für die Schicht 4. Dieser leitende Kunststofftropfen 12 kann sehr leicht dadurch erhalten werden, daß die Anoden 1 einzeln oder
in einer großen Gruppe in eine dünne Schicht des leitenden Kunststoffes getaucht und wieder herausgezogen
werden, wobei sich automatisch der leitende Tropfen 12
an der Unterseite des Anoden ergibt.

Vor oder nach dem Einbringen der Anoden in die Form 11
wird eine dünne Schicht des leitenden Kunststoffes 4
in die Form 11 eingebracht, die sich durch Härtung
verfestigt und die Kathodenanschlußschicht bildet.

Anschließend wird, wie aus Figur 7 zu ersehen ist, ein
nichtleitendes Kunstharz 5 in die Form so weit eingefüllt, daß die Anoden 1 und noch ein Stück des anschließenden Anodenzuleitungsdrahtes eingebettet sind.

Nach dem Verfestigen der Schicht 5 können die herausragenden Enden 6 des Anodenzuleitungsdrahtes durch Sandstrahlen oder Schleifen von der Oxidschicht befreit werden, und sie werden zweckmäßig, wie in Figur 7 dargestellt, vor oder nach dieser Behandlung auf die Oberfläche der Schicht 5 umgebogen.

Schließlich wird, wie in Figur 8 dargestellt, die leitende Kunststoffschicht 3 aufgebracht, welche die Anodenanschlußchicht der Kondensatoren darstellt. Dieser Kunststoff darf jedoch keine auf den Draht 6 oxidierend wirkenden Bestandteile enthalten. Nach dem Erhärten dieser Schicht wird der ganze Kunststoffblock aus der Form 11 herausgenommen und etwa senkrecht zu den Anschlußschichten 3 und 4 zerteilt, wie dies durch die Pfeile 13 angedeutet ist. Auf diese Weise werden die in Figur 2 dargestellten Kondensatoren erhalten.

Es ist zweckmäßig, für alle Schichten den gleichen Kunststoff zu verwenden, wobei sich die Schichten 3 und 4 nur durch einen Zusatz von Metallpulver von der Schicht 5 unterscheiden. Der Anteil an Metallpulver muß dabei so groß sein, daß mindestens eine Leitfähigkeit von $1 \cdot 10^{-3} \Omega \cdot cm$ bei der verfestigten Schicht erhalten wird.

Wie ersichtlich, lassen sich so zahlreiche Kondensatoren gleichzeitig mit elektrischen Anschlüssen versehen, wobei eine Schweißung an den Anodenzuleitungsdrähten 2 und damit eine Verschlechterung der elektrischen Eigenschaften vermieden wird.

Fr/rk - 08.08.1979

A n s p r ü c h e
------------------

1.) Trockenelektrolyt-Kondensator mit einer Anode aus
Ventilmetall, einer darauf angeordneten dielektrischen Oxidschicht, einer Kathodenschicht aus einem
halbleitenden Oxid auf der dielektrischen Schicht,
einer oder mehreren leitenden Schichten auf der
halbleitenden Schicht, einem mit der Anode verbundenen Zuleitungsdraht aus Ventilmetall und lötfähigen Anschlüssen an der obersten leitenden Schicht
und an dem Zuleitungsdraht aus Ventilmetall, d a -
d u r c h   g e k e n n z e i c h n e t, daß das
von der Oxidschicht befreite Ende des Anodenzuleitungsdrahtes (2) direkt in eine als Anodenanschluß
dienende leitende Schicht (3) eingebettet ist.

2.) Trockenelektrolyt-Kondensator nach Anspruch 1, dadurch gekennzeichnet, daß der Anodenzuleitungsdraht
(2) auf einem Teil seiner Länge etwa parallel zur
leitenden Schicht (3) verläuft.

3.) Trockenelektrolyt-Kondensator nach Anspruch 1 oder
2, dadurch gekennzeichnet, daß die als Anodenanschluß dienende leitende Schicht (3) aus einem mit
leitenden Teilchen versetzten Kunststoff besteht,

0024302

K.Treml 1

der mindestens in unmittelbarer Umgebung des Anodenzuleitungsdrahtes (2) frei von oxidierenden Bestandteilen ist.

4.) Trockenelektrolyt-Kondensator nach Anspruch 1 oder
2, dadurch gekennzeichnet, daß die als Anodenanschluß
dienende leitende Schicht (3) aus einer aufgedampften
Metallschicht besteht.

5.) Trockenelektrolyt-Kondensator nach Anspruch 1
oder 2, dadurch gekennzeichnet, daß die als Anodenanschluß dienende leitende Schicht (3) aus einer
aufgespritzten Metallschicht besteht.

6.) Trockenelektrolyt-Kondensator nach Anspruch 1 bis
5, dadurch gekennzeichnet, daß als Kathodenanschluß
eine leitende Schicht (4) vorgesehen ist.

7.) Trockenelektrolyt-Kondensator nach Anspruch 1 bis
6, dadurch gekennzeichnet, daß mindestens eine der
leitenden Anschlußschichten (3, 4) an der Außenseite mit einer lötfähigen Metallfolie bedeckt ist.

8.) Trockenelektrolyt-Kondensator nach Anspruch 1 bis
7, dadurch gekennzeichnet, daß eine der leitenden
Anschlußschichten (3, 4) ein magnetisierbares Material enthält.

9.) Trockenelektrolyt-Kondensator nach Anspruch 8, dadurch gekennzeichnet, daß das magnetisierbare Material Nickel ist.

. / .

K.Treml 1

10.) Trockenelektrolyt-Kondensator nach Anspruch 1
     bis 9, dadurch gekennzeichnet, daß er in Kunststoff (5) eingebettet ist und die stirnseitigen
     Anschlüsse (3, 4) aus dem gleichen Kunststoff
     mit einem Zusatz von Metallteilchen bestehen.

11.) Trockenelektrolyt-Kondensator nach Anspruch 1
     bis 10, dadurch gekennzeichnet, daß mindestens
     eine der leitenden Anschlußschichten (3, 4)
     sich teilweise auf die Seitenflächen der Kondensatorumhüllung erstreckt.

12.) Verfahren zur Herstellung von Trockenelektrolyt-
     Kondensatoren nach einem der Ansprüche 1 bis 11,
     dadurch gekennzeichnet, daß nach der Erzeugung
     bzw. dem Aufbringen der Schichten auf der mit
     einem Zuleitungsdraht (2) aus Ventilmetall versehenen Anode (1) diese mit einer Anschlußschicht
     (4) auf der vom Zuleitungsdraht (2) abgewandten
     Seite der Anode (1) versehen wird, daß die Anode (1) und der Zuleitungsdraht (2) bis auf ein
     Endteil in nichtleitenden Kunststoff (5) eingegossen werden, daß nach dem Verfestigen des Kunststoffes (5) der herausragende Endteil des Zuleitungsdrahtes (2) von der Oxidschicht befreit wird
     und daß dann eine Schicht aus leitfähig gemachtem
     Kunststoff (3), der mindestens in unmittelbarer
     Umgebung des Anodenzuleitungsdrahtes (2) frei ist
     von oxidierenden Bestandteilen, auf den nichtleitenden Kunststoff (5) so aufgebracht wird, daß der
     von der Oxidschicht befreite Endteil des Zuleitungsdrahtes (2) in diese Schicht (3) eingebettet wird.

                                          . / .

K. Treml 1

13.) Verfahren nach Anspruch 12, dadurch gekennzeichnet, daß das Befreien des Zuleitungsdrahtes (2) von der Oxidschicht durch Sandstrahlen vorgenommen wird.

14.) Verfahren nach Anspruch 12, dadurch gekennzeichnet, daß das Befreien des Zuleitungsdrahtes (2) von der Oxidschicht durch Schleifen vorgenommen wird.

15.) Verfahren nach Anspruch 12 bis 14, dadurch gekennzeichnet, daß der Zuleitungsdraht (2) vor dem Einbetten in die leitende Kunststoffschicht (3) auf die Oberfläche des nichtleitenden Kunststoffes (5) hin umgebogen wird.

16.) Verfahren nach Anspruch 12 bis 15, dadurch gekennzeichnet, daß vor dem Anbringen der Kathodenanschlußschicht (4) auf die von dem Zuleitungsdraht (2) abgewandte Stirnseite des Kondensatorkörpers ein Tropfen (12) eines leitfähig gemachten Kunststoffes aufgebracht wird.

17.) Verfahren nach Anspruch 12 bis 16, dadurch gekennzeichnet, daß mehrere beschichtete Anoden (1) nebeneinander mit der vom Zuleitungsdraht (2) abgewandten Stirnseite in eine Form (11) eingestellt werden, die eine flüssige Schicht aus einem härtbaren, mit leitenden Teilchen versetzten Kunststoff (4) enthält, daß nach dem Erhärten der Kunststoffschicht (4) ein nichtleitender Kunststoff (5)

. / .

0024302

K.Treml 1

so weit in die Form (11) eingefüllt wird, daß
die Endteile der Zuleitungsdrähte (2) aus dem
Kunststoff herausragen, daß nach dem Erhärten
des nichtleitenden Kunststoffes (5) die Oxidschicht von den herausragenden Endteilen der Zuleitungsdrähte (2) entfernt wird, daß ein mit
leitenden Teilchen versetzter Kunststoff (3),
der frei ist von oxidierenden Bestandteilen, so
aufgegossen wird, daß die Endteile der Zuleitungsdrähte (2) in den leitenden Kunststoff eingebettet werden und daß nach dem Erhärten des leitenden Kunststoffes (3) der so erhaltene Kunststoffblock der Form (11) entnommen und etwa senkrecht zu den leitenden Schichten (3, 4) so zerteilt wird, daß einzelne Kondensatoren mit leitenden Anschlußschichten erhalten werden.

Fr/rk  -  08.08.1979                                    . / .

Fig.1 Fig.2 Fig.3 Fig.4

Fig.5

Fig.6

Fig.7

Fig.8